(19) Europäisches Patentamt
European Patent Office
Office européen des brevets

(11) **EP 3 178 662 B1**

(12) **EUROPÄISCHE PATENTSCHRIFT**

(45) Veröffentlichungstag und Bekanntmachung des Hinweises auf die Patenterteilung:
**12.12.2018   Patentblatt 2018/50**

(51) Int Cl.:
*B60C 1/00* (2006.01)          *C08K 3/36* (2006.01)
*C08L 9/00* (2006.01)          *C08L 9/06* (2006.01)

(21) Anmeldenummer: **16194062.2**

(22) Anmeldetag: **17.10.2016**

(54) **FAHRZEUGLUFTREIFEN**

PNEUMATIC TYRES FOR A VEHICLE

PNEUMATIQUES DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2015   DE 102015224546**

(43) Veröffentlichungstag der Anmeldung:
**14.06.2017   Patentblatt 2017/24**

(73) Patentinhaber: **Continental Reifen Deutschland GmbH**
**30165 Hannover (DE)**

(72) Erfinder:
 • **Müller, Norbert**
  **29336 Nienhagen (DE)**
 • **Pavon Sierra, Viktoria**
  **30419 Hannover (DE)**
 • **Stark, Anette**
  **30451 Hannover (DE)**
 • **Söhnen, Dietmar**
  **31867 Lauenau (DE)**
 • **Weber, Christian**
  **30826 Garbsen (DE)**
 • **Nawrocka, Monika**
  **30455 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 2 105 462          EP-A1- 2 557 114**
**DE-A1-102008 037 593**

 • **DATABASE WPI Week 200625 Thomson Scientific, London, GB; AN 2006-235186 XP002768675, & JP 2006 077097 A (TOYO RUBBER IND CO LTD) 23. März 2006 (2006-03-23)**

**Beschreibung**

**Fahrzeugluftreifen**

Die Erfindung betrifft einen Fahrzeugluftreifen mit einem ein Laufstreifenprofil aufweisenden Laufstreifen aus einer mit Schwefel vernetzten Kautschukmischung.

Die Fahreigenschaften eines Fahrzeugluftreifens werden sowohl durch die Ausbildung des Laufstreifenprofils als auch durch die für den Laufstreifen verwendeten Kautschukmischungen bestimmt.

Die Eigenschaften des Laufstreifenprofils ergeben sich im Wesentlichen durch die auf dem Laufstreifen angeordneten Laufstreifenelemente, insbesondere Rillen, Blöcke und Lamellen. Bei der Entwicklung von Laufstreifenprofilen werden zur Verkürzung der Entwicklungszeiten unterschiedliche Analyseprogramme verwendet, mit denen man auf das Verhalten des Reifens auf Eis, Schnee, nasser oder trockener Fahrbahn schließen kann. Mehr Lamellen in einem Laufstreifenblock gehen z. B. mit einer besseren Verzahnung mit schneeigem Untergrund einher. In Mundl, R. , Fischer, M., Strache, W., Wiese, K., Wies, B. und Zinken, K. H., "Virtual Pattern Optimization Based on Performance Prediction Tools", Tire Science and Technology, TSTCA, Vol. 36, No. 3, July - September 2008, pp. 192-210, wird der so genannte Criff-Index zur Einordnung von Reifen in bestimmte Klassen verwendet. Der Criff-Index beschreibt die Weichheit des Profils und berechnet sich nach folgender Formel

$$\text{Criff} - \text{Index} = \sum_{footpr.} l_i \times \frac{h_i}{d_i}$$

wobei $l$ die Lamellen- und Blockkantenlängen des Laufstreifenprofils, $h$ die durchschnittliche Lamellen- und Rillentiefe und $d$ der Kantenabstand der Lamellen in mm bei Projektion des Profils in Bremsrichtung sind. Für Sommerreifen, die wenige oder gar keine Lamellen aufweisen ($d$ groß), ergibt sich so ein Criff-Index von weniger als 1,5 mm. Ganzjahresreifen weisen einen Criff-Index von 1,5 bis 2,5 mm auf und Winterreifen besitzen auf Grund ihrer hohen Lamellierung ($d$ klein) einen Criff-Index von mehr als 2,5 mm.

Ferner sind die Fahreigenschaften eines Fahrzeugluftreifens in einem großen Umfang von der Kautschukzusammensetzung des Laufstreifens abhängig. Es werden daher besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich.

Um die vorgenannten Zielkonflikte zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Es ist bekannt, in kieselsäurehaltigen Mischungen zur Verbesserung der Verarbeitbarkeit und zur Anbindung des polaren Füllstoffes an den Kautschuk Silan-Kupplungsagenzien zuzusetzen. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Derartige Silan-Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT® in verschiedenen Varianten von der Firma Momentive, USA, oder solche, die unter dem Namen VP Si 363 von der Firma Evonik Industries vertrieben werden.

So genannte NXT® Silane werden von der Firma Momentive, USA in Kombination mit Kieselsäuren mit hoher spezifischer Oberfläche und funktionalisierten Polymeren vorgeschlagen, um eine einfache Verarbeitbarkeit von Hochleistungsmischungen zu erzielen.

Mercaptosilane, wie solche des Typs NXT® von der Firma Momentive, werden z. B. in der EP 2 557 114 A1, der DE 10 2008 037 593 A1, der JP 2006 077097 A und der EP 2 105 462 A1 für Reifenlaufstreifenmischungen beschrieben.

Der vorliegenden Erfindung liegt nun die Aufgabe zugrunde, einen Fahrzeugluftreifen bereitzustellen, der sich durch ein verbessertes Trockenbremsen ohne Nachteile in den anderen Reifeneigenschaften auszeichnet.

Gelöst wird diese Aufgabe durch einen Fahrzeugluftreifen, der ein Sommer- oder Ganzjahresreifen mit einem Criff-Index des Laufstreifenprofils ≤ 2,5 mm ist, wobei der Criff-Index gemäß der Formel

$$\text{Criff} - \text{Index} = \sum_{footpr.} l_i \times \frac{h_i}{d_i}$$

mit den Lamellen- und Blockkantenlängen *l* des Laufstreifenprofils, der durchschnittlichen Lamellen- und Rillentiefe *h* und dem Kantenabstand *d* der Lamellen in mm bei Projektion des Profils in Bremsrichtung bestimmt wird, und die Kautschukmischung des Laufstreifens

- wenigstens einen Dienkautschuk,
- 30 bis 250 phr zumindest einer Kieselsäure und
- 6,9 bis 19,8 mmol zumindest eines geblockten und/oder ungeblockten Mercaptosilans pro 100 g Kieselsäure, bezogen auf eine Kieselsäure mit einer CTAB-Oberfläche (gemäß ASTM D 3765) von 160 m$^2$/g, enthält.

Überraschenderweise scheint es zu einer Interaktion zwischen dem speziellen Mercaptosilan, dessen Menge und der Profilbeschaffenheit zu kommen, die dazu führt, dass das Trockenbremsverhalten signifikant verbessert wird, ohne Nachteile in den anderen Reifeneigenschaften in Kauf nehmen zu müssen. So bleibt der Rollwiderstand ebenso wie das Abriebverhalten überraschenderweise auf gleichem Niveau. Auch das Nassbremsen verbleibt auf gutem Niveau.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind, wie weiter unten ausgeführt, Acylgruppen.

Der Ausdruck "geblocktes und/oder ungeblocktes Mercaptosilan" bedeutet, dass sowohl ein geblocktes als auch ein ungeblocktes als auch ein Gemisch aus geblocktem und ungeblocktem Silan in der erfindungsgemäßen Kautschukmischung enthalten sein kann. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Die Angabe der Mercaptosilanmenge erfolgt in mmol/ 100 g Kieselsäure, bezogen auf eine Kieselsäure mit einer CTAB-Oberfläche (gemäß ASTM D 3765) von 160 m$^2$/g, da die Mercaptosilane unterschiedliche Molmassen aufweisen können und daher ihre Molzahl mit den kieselsäureaktiven Gruppen relevant ist. Die erfindungsgemäßen Mengen des Mercaptosilans bewegen sich deutlich unter den von den Herstellern angegebenen Mengen, die beispielsweise 8 % NXT®-Silan bezogen auf die phr-Menge an Kieselsäure vorschlagen (entsprechend 8 phf (parts per hundred parts of filler by weight) bzw. 21,9 mmol pro 100g Kieselsäure). So hat man zusätzlich den Vorteil einer deutlichen Kostenreduktion der Mischung, da es sich bei den Silanen um sehr hochpreisige Zuschlagstoffe handelt.

Eine Kieselsäure mit einer CTAB-Oberfläche von 160 m$^2$/g dient als Bezugsgröße. Wird eine Kieselsäure mit anderer Oberfläche verwendet, müssen die Mercaptosilanmengen entsprechend folgender Formel umgerechnet und angepasst werden:

$$M_x = (M_{160} * CTAB_x)/CTAB_{160}$$

mit

$M_x$: Mercaptosilanmenge für Kieselsäure mit CTAB-Oberfläche von x $m^2/g$
$M_{160}$: Mercaptosilanmenge für Kieselsäure mit CTAB-Oberfläche von 160 $m^2/g$
$CTAB_x$: CTAB-Oberfläche der anderen Kieselsäure
$CTAB_{160}$: 160 $m^2/g$

Bevorzugt enthält die Kautschukmischung 9,6 bis 18,1 mmol zumindest eines geblockten und/oder ungeblockten Mercaptosilans pro 100 g Kieselsäure, bezogen auf eine Kieselsäure mit einer CTAB-Oberfläche (gemäß ASTM D 3765) von 160 $m^2/g$, besonders bevorzugt 12,3 bis 15,6 mmol zumindest eines geblockten und/oder ungeblockten Mercaptosilans pro 100 g Kieselsäure, bezogen auf eine Kieselsäure mit einer CTAB-Oberfläche (gemäß ASTM D 3765) von 160 $m^2/g$. Mit diesen Mengen konnten die besten Ergebnisse hinsichtlich des Trockenbremsens bei gleichzeitigem Erhalt des Niveaus der anderen Reifeneigenschaften erzielt werden.

Gemäß einer bevorzugten Weiterbildung der Erfindung weist das geblockte und/oder ungeblockte Mercaptosilan die allgemeine Summenformel I) auf:

$$\text{I)} \qquad (R^4)_3\text{Si-Z-S-}R^5 \text{ ,}$$

wobei die Reste $R^4$ innerhalb eines Moleküls gleich oder verschieden voneinander sein können und Alkoxy-Gruppen mit 1 bis 10 Kohlenstoffatomen sind,
wobei $R^5$ eine Acylgruppe mit 1 bis 20 Kohlenstoffatomen oder eine Wasserstoffatom ist, und
wobei Z eine Alkylgruppe mit 1 bis 10 Kohlenstoffatomen ist.
S ist die Abkürzung für Schwefel und Si für Silizium.

Geblockte Mercaptosilane tragen an dem Schwefelatom eine Schutzgruppe, in dem vorliegenden Fall in Formel I) die Gruppe $R^5$, weshalb sie auch "geschützte Mercaptosilane" genannt werden.

Gemäß einer bevorzugten Ausführungsform der Erfindung handelt es sich bei dem Mercaptosilan um das geblockte Mercaptosilan 3-Octanoylthio-1-propyltriethoxysilan, womit in oben genannter Formel I) alle Reste $R^4$ Ethoxy (OEt) sind, Z eine Propylgruppe und $R^5$ eine Octanoylgruppe ist. Mit diesem Mercaptosilan konnten besonders gute Ergebnisse hinsichtlich des Verarbeitungsverhaltens und der Reifeneigenschaften erzielt werden. Es ist unter dem Namen NXT® Silane von der Firma Momentive, USA erhältlich.

Für dieses Mercaptosilan ergeben sich folgende erfindungsgemäß einzusetzenden Mengen in phf: 2,5 bis 7,2 phf (6,9 bis 19,8 mmol/ 100 g Kieselsäure, bezogen auf eine Kieselsäure mit einer CTAB-Oberfläche von 160 $m^2/g$), bevorzugt 3,5 bis 6,6 phf (9,6 bis 18,1 mmol/ 100 g Kieselsäure, bezogen auf eine Kieselsäure mit einer CTAB-Oberfläche von 160 $m^2/g$), besonders bevorzugt 4,5 bis 5,7 phf (12,3 bis 15,6 mmol/ 100 g Kieselsäure, bezogen auf eine Kieselsäure mit einer CTAB-Oberfläche von 160 $m^2/g$).

Die Kautschukmischung für den Laufstreifen enthält wenigstens einen Dienkautschuk. Demnach können auch mehrere Kautschuke im Verschnitt eingesetzt werden.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bei dem wenigstens einen Dienkautschuk handelt es sich um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder AcrylatKautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk.
Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen vorzugsweise bei der Herstellung von technischen Gummiartikeln, wie Gurten, Riemen, Schläuchen und/oder Schuhsohlen zum Einsatz.

Bevorzugt handelt es sich bei dem oder den Dienkautschuk(en) jedoch um natürliches Polyisopren (NR) und/oder synthetisches Polyisopren (IR) und/oder Polybutadien (BR, Butadien-Kautschuk) und/oder Styrol-Butadien-Copolymer (SBR, Styrol-Butadien-Kautschuk).

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisoprenen denkbar.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Butadien-Kautschuk (BR, Polybutadien) kann es sich um alle dem Fachmann bekannten Typen mit einem Mw von 250000 bis 5000000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithiumkatalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das eingesetzte Polybutadien kann ebenfalls mit den oben beim Styrol-Butadien-Kautschuk genannten Modifizierungen und Funktionalisierungen endgruppenmodifiziert und/oder entlang der Polymerketten funktionalisiert sein.

Die Kautschukmischung für den Laufstreifen enthält 30 bis 250 phr zumindest einer Kieselsäure. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 $m^2/g$, bevorzugt von 60 bis 350 $m^2/g$, besonders bevorzugt von 120 bis 320 $m^2/g$, und eine CTAB-Oberfläche (gemäß ASTM D 3765) von 30 bis 380 $m^2/g$, bevorzugt von 50 bis 330 $m^2/g$, besonders bevorzugt von 110 bis 300 $m^2/g$, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z. B. Zeosil® 1165 MP der Firma Solvay), zum Einsatz kommen.

Neben den bereits ausführlich erläuterten, erfindungswesentlichen Bestandteilen, kann die Kautschukmischung für den Laufstreifen weitere, in der Kautschukindustrie übliche Bestandteile enthalten. Derartige Bestandteile werden im Folgenden erläutert:

Die Kautschukmischung für den Laufstreifen kann als weiteren Füllstoff Ruß enthalten. Es sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Die Kautschukmischung für den Laufstreifen kann neben Kieselsäure und Ruß noch weitere bekannte polare und/oder unpolare Füllstoffe, wie Alumosilicate, Kreide, Stärke, Magnesiumoxid, Titandioxid oder Kautschukgele, enthalten. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff denkbar.

Zinkoxid gehört im Rahmen der vorliegenden Erfindung nicht zu den Füllstoffen.

In der Kautschukmischung können Weichmacher in Mengen von 1 bis 90 phr, bevorzugt von 5 bis 70 phr, besonders bevorzugt von 10 bis 60 phr, enthalten sein. Geringe Mengen an Weichmacher werden im Wesentlichen im Hinblick auf eine besonders gute Prozessierbarkeit der Kautschukmischung, insbesondere der Extrudate vor der Vernetzung, zugesetzt, während hohe Mengen an Weichmacher im PKW-Reifenbereich zur Einstellung der Mischungshärte dienen.

Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung für den Laufstreifen übliche Zusatzstoffe in üblichen Gewichtsteilen enthalten, die bei deren Herstellung bevorzugt in wenigstens einer Grundmischstufe zugegeben werden. Zu diesen Zusatzstoffen zählen

a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD) und
e) Verarbeitungshilfsmittel, wie z. B. Fettsäuresalze, wie z. B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich auch 0,1 bis 10 phr, bevorzugt 1 bis 8 phr, besonders bevorzugt 1,5 bis 4 phr, Zinkoxid (ZnO).

Hierbei kann es sich um alle dem Fachmann bekannten Typen an Zinkoxid handeln, wie z. B. ZnO-Granulat oder -Pulver. Das herkömmlicherweise verwendete Zinkoxid weist in der Regel eine BET-Oberfläche von weniger als 10 m$^2$/g auf. Es können aber auch Zinkoxide mit einer BET-Oberfläche von 10 bis 100 m$^2$/g, wie z. B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation der schwefelvernetzten Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B. DipDis (Bis-(Diisopropyl)thiophosphoryldisulfid) und/oder Bis(O,O-2-ethylhexyl-thiophosphoryl)Polysulfid (z. B. Rhenocure SDT 50®,

Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung für dem Laufstreifen wird bei deren Herstellung bevorzugt wenigstens ein Vulkanisationsmittel ausgewählt aus der Gruppe enthaltend Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für den Laufstreifen eines Fahrzeugluftreifens herstellen.

Die Begriffe "vulkanisiert" und "vernetzt" werden im Rahmen der vorliegenden Erfindung synonym verwendet.

Die Kautschukmischung wird bei Herstellung des erfindungsgemäßen Reifens wie bekannt als Fertigmischung aufgelegt oder gespult. Der so erzeugte Reifenrohling wird in der Vulkanisierform unter profilgebender Formgebung vulkanisiert und in seine endgültige Form gebracht.

Gemäß einer vorteilhaften Weiterbildung der Erfindung handelt es sich bei dem Fahrzeugluftreifen um einen Sommerreifen, dessen Laufstreifenprofil einen Criff-Index < 1,5 mm aufweist und dessen Kautschukmischung des Laufstreifens eine Kältesprödigkeitstemperatur (Brittleness-Point) > -45 °C gemessen nach DIN ISO 812 aufweist. Bei einem derartigen Reifen werden besonders gute Werte beim Nass- und Trockenbremsen erzielt.

Alternativ dazu handelt es sich bei dem Fahrzeugluftreifen um einen Ganzjahresreifen, dessen Laufstreifen einen Criff-Index von 1,5 bis 2,5 mm aufweist und dessen Kautschukmischung des Laufstreifens eine Kältesprödigkeitstemperatur gemäß DIN ISO 812 von $\leq$ -45 °C aufweist. Bei diesem Reifen hat man zusätzlich zu dem guten Trockenbremsverhalten noch gute Wintereigenschaften durch die weichere Mischung.

Die Erfindung soll nun anhand von Vergleichs- und Ausführungsbeispielen, die in den Tabellen 1 und 2 zusammengefasst sind, näher erläutert werden.

**Tabelle 1**

| Bestandteile | Einheit | 1* | 2* | 3* | 4* | 5 | 6 |
|---|---|---|---|---|---|---|---|
| Naturkautschuk | phr | 30 | 30 | 25 | 25 | 10 | 10 |
| S-SBR 1[a] | phr | 70 | 70 | 75 | 75 | - | - |
| S-SBR 2[b] | phr | - | - | - | - | 90 | 90 |
| Weichmacher | phr | 24 | 24 | 11 | 11 | 10 | 10 |
| Ruß N339 | phr | 5 | 5 | 5 | 5 | 4 | 4 |
| Kieselsäure A[c] | phr | - | - | - | - | 135 | 135 |
| Kieselsäure B[d] | phr | 86 | 86 | 82 | 82 | - | - |
| Silan-Kupplungsagens[e] | phr | 6,2 | 3,4 | - | - | - | - |
| gebl. Mercaptosilan[f] | phr | - | - | 8,42 | 4,6 | 13,8 | 7,6 |
| Alterungsschutzmittel | phr | 5 | 5 | 5 | 5 | 5 | 5 |
| Prozesshilfsmittel | phr | 5 | 5 | 5 | 5 | 5 | 5 |
| Zinkoxid | phr | 2 | 2 | 2 | 2 | 2 | 2 |
| Stearinsäure | phr | 2 | 2 | 2 | 2 | 2 | 2 |
| Beschleuniger | phr | 4 | 4 | 3,3 | 3,3 | 4,9 | 4,9 |
| Schwefel | phr | 1,7 | 1,7 | 0,84 | 0,84 | 2,1 | 2,1 |
| **Eigenschaft** | | | | | | | |
| Kältesprödigkeitstemperatur nach DIN ISO 812 | °C | -37 | -37 | -37 | -37 | -62 | -62 |

a) lösungspolymerisiertes Styrol-Butadien-Copolymer mit hohem $T_g$

b) lösungspolymerisiertes Styrol-Butadien-Copolymer mit niedrigem $T_g$

c) Zeosil® 1165 MP, Fa. Solvay

d) Ultrasil®VN3, Fa. Evonik

e) $S_2$-Silan: TESPD

f) geblocktes Mercaptosilan: 3-(Octanoylthio)-1-Propyl-Triethoxysilan, Fa. Momentive *außerhalb des Schutzbereiches von Anspruch 1

Es wurden 6 verschiedene Kautschukmischungen, die in der Tabelle 1 dargestellt sind, für die Reifenlaufstreifen verwendet. Bei der Mischung 1 handelte es sich um eine Mischung für Sommerreifen, die als Silan TESPD (3,3'-Bis(triethoxysilylpropyl)disulfid) enthielt, also kein Mercaptosilan gemäß Anspruch 1. Die Menge an TESPD betrug 6,2 phr oder auf den Füllstoff bezogen 7,2 phf bzw. 15,2 mmol/100g Kieselsäure, bezogen auf eine Kieselsäure mit einer CTAB-Oberfläche (gemäß ASTM D 3765) von 160 m²/g. Die Mischung 2 enthielt dasselbe Silan nur in deutlich geringerer Menge, nämlich 3,4 phr oder auf den Füllstoff bezogen 4 phf bzw. 8,34 mmol/100g Kieselsäure, bezogen auf eine Kieselsäure mit einer CTAB-Oberfläche (gemäß ASTM D 3765) von 160 m²/g.

Die Mischung 3 ist eine typische Sommerreifenmischung mit dem geblockten Mercaptosilan 3-(Octanoylthio)-1-Propyl-Triethoxysilan als Zuschlagstoff in üblicher Menge von 8,42 phr oder auf den Füllstoff bezogen 10,2 phf bzw. 27,98 mmol/100g Kieselsäure, bezogen auf eine Kieselsäure mit einer CTAB-Oberfläche (gemäß ASTM D 3765) von

160 m$^2$/g. Bei Mischung 4 wurde die Menge an Mercaptosilan deutlich erniedrigt: 4,6 phr oder auf den Füllstoff bezogen 5,6 phf bzw. 15,36 mmol/100g Kieselsäure, bezogen auf eine Kieselsäure mit einer CTAB-Oberfläche (gemäß ASTM D 3765) von 160 m$^2$/g.

Die Mischung 5 ist eine Mischung, die sowohl für Ganzjahres- als auch für Winterreifen eingesetzt werden kann, wobei die Einordnung in die Reifenklasse dann durch das Profil bzw. dessen Criff-Index bestimmt wird. Sie enthielt als geblocktes Mercaptosilan 3-(Octanoylthio)-1-Propyl-Triethoxysilan in üblicher Menge von 13,8 phr oder auf den Füllstoff bezogen 10,2 phf bzw. 27,98 mmol/100g Kieselsäure, bezogen auf eine Kieselsäure mit einer CTAB-Oberfläche (gemäß ASTM D 3765) von 160 m$^2$/g. Die Mischung 6 ist eine entsprechende Mischung mit deutlich reduzierter Mercaptosilanmenge von 7,6 phr oder auf den Füllstoff bezogen 5,6 phf bzw. 15,36 mmol/100g Kieselsäure, bezogen auf eine Kieselsäure mit einer CTAB-Oberfläche (gemäß ASTM D 3765) von 160 m$^2$/g.

Mit den Mischungen der Tabelle 1 wurden Reifen der Dimension 205/55 R16 mit unterschiedlichen experimentellen Profiltypen gebaut, die auf dem ContiPremiumContact® (Sommerreifen), dem ContiProContact® (Ganzjahresreifen) und ContiWinterContact® TS850® (Winterreifen) basieren, wobei die Mischungen 1 bis 6 als Laufstreifenmischungen eingesetzt wurden. Mit diesen Reifen wurden folgende Tests durchgeführt:

- Trockenbremsen: ABS-Bremsen aus 100 km/h, trockener Asphalt, hohes $\mu$ (high $\mu$)
- Nassbremsen: ABS-Bremsen aus 80 km/h, nasser Asphalt, niedriges $\mu$ (low $\mu$)
- Rollwiderstand: gemäß ISO 28580
- Abrieb: Gewichtsverlust der jeweiligen Reifen nach 8800 km Straßenfahrt bei einer mittleren Temperatur von + 15 °C

Die ermittelten Werte wurden in Performance (Leistung) umgerechnet, wobei die Reifen mit einer Kautschukmischung mit herkömmlicher hoher Silanmenge bei jeder getesteten Eigenschaft auf 100 % Performance normiert wurden. Die Reifen mit den Mischungen mit geringerer Silanmenge beziehen sich dann auf die entsprechenden Reifen, die dieselbe Mischung nur mit mehr Silan in der Laufstreifenmischung aufwiesen. Hierbei bedeuten Werte kleiner 100 % eine Verschlechterung in den Eigenschaften, während Werte größer 100 % eine Verbesserung darstellen. Die Ergebnisse sind in der Tabelle 2 dargestellt.

**Tabelle 2**

| Reifeneigenschaft | Trockenbremsen | Nassbremsen | Rollwiderstand | Abrieb |
|---|---|---|---|---|
| Sommerreifen mit Mischung 1 und Criff-Index von 0,5 | 100 | 100 | 100 | 100 |
| Sommerreifen mit Mischung 2 und Criff-Index von 0,5 | 102 | 104 | 101 | 85 |
| Sommerreifen mit Mischung 3 und Criff-Index von 0,5 | 100 | 100 | 100 | 100 |
| Sommerreifen mit Mischung 4 und Criff-Index von 0,5 | 103 | 105 | 98 | 100 |
| Ganzjahresreifen mit Mischung 5 und Criff-Index von 1,8 | 100 | 100 | 100 | 100 |
| Ganzjahresreifen mit Mischung 6 und Criff-Index von 1,8 | 102 | 99 | 98 | 100 |
| Winterreifen mit Mischung 5 und Criff-Index von 3 | 100 | 100 | 100 | 100 |
| Winterreifen mit Mischung 6 und Criff-Index von 3 | 98 | 98 | 98 | 90 |

Aus der Tabelle 2 wird ersichtlich, dass eine Reduzierung der Silanmenge eines herkömmlichen Silans bei Sommerreifen zwar das Trockenbremsen und Nassbremsen verbessert, sich aber der Abrieb sehr deutlich verschlechtert. Führt man die Reduzierung der Silanmenge bei einer Mischung mit einem Mercaptosilan gemäß Anspruch 1 durch, so verbessert sich das Trockenbremsen, der Abrieb bleibt aber überraschenderweise auf gutem Niveau. Dies ist aber nur bei Sommer- und Ganzjahresreifen der Fall. Setzt man die Mischung 6 als Laufstreifen bei einem Reifen mit Winterprofil ein, so beobachtet man keine Verbesserungen im Trocken- und Nassbremsen und der Abrieb wird wieder deutlich schlechter. Dies scheint in einer Wechselwirkung zwischen eingesetztem Silan und dessen Menge sowie der Profilbeschaffenheit begründet zu sein.

Der Effekt aus Zusammenspiel von Silan, Silanmenge und Profilbeschaffenheit führt bei einem Sommerreifenprofil neben einem besseren Trockenbremsen sogar gleichzeitig zu einer deutlichen Verbesserung im Nassbremsen, ohne dass Einbußen im Abrieb hingenommen werden müssen.

**Patentansprüche**

1. Fahrzeugluftreifen mit einem ein Laufstreifenprofil aufweisenden Laufstreifen aus einer mit Schwefel vernetzten Kautschukmischung, wobei der Fahrzeugluftreifen ein Sommer- oder Ganzjahresreifen mit einem Criff-Index des Laufstreifenprofils ≤ 2,5 mm ist, wobei der Criff-Index gemäß der Formel

$$\mathrm{Criff-Index} = \sum_{footpr.} \mathrm{l_i} \times \frac{\mathrm{h_i}}{\mathrm{d_i}}$$

mit den Lamellen- und Blockkantenlängen *l* des Laufstreifenprofils, der durchschnittlichen Lamellen- und Rillentiefe *h* und dem Kantenabstand *d* der Lamellen in mm bei Projektion des Profils in Bremsrichtung bestimmt wird, und die Kautschukmischung

   - wenigstens einen Dienkautschuk,
   - 30 bis 250 phr zumindest einer Kieselsäure und
   - 6,9 bis 19,8 mmol zumindest eines geblockten und/oder ungeblockten Mercaptosilans pro 100 g Kieselsäure, bezogen auf eine Kieselsäure mit einer CTAB-Oberfläche (gemäß ASTM D 3765) von 160 m$^2$/g, enthält.

2. Fahrzeugluftreifen nach Anspruch 1, **dadurch gekennzeichnet, dass** die Kautschukmischung 9,6 bis 18,1 mmol zumindest eines geblockten und/oder ungeblockten Mercaptosilans pro 100 g Kieselsäure, bezogen auf eine Kieselsäure mit einer CTAB-Oberfläche (gemäß ASTM D 3765) von 160 m$^2$/g, enthält.

3. Fahrzeugluftreifen nach Anspruch 1 oder 2, **dadurch gekennzeichnet, dass** die Kautschukmischung 12,3 bis 15,6 mmol zumindest eines geblockten und/oder ungeblockten Mercaptosilans pro 100 g Kieselsäure, bezogen auf eine Kieselsäure mit einer CTAB-Oberfläche (gemäß ASTM D 3765) von 160 m$^2$/g, enthält.

4. Fahrzeugluftreifen nach zumindest einem der vorhergehenden Ansprüche, **dadurch gekennzeichnet, dass** das geblockte und/oder ungeblockte Mercaptosilan die allgemeine Summenformel I) aufweist:

   I)         $(R^4)_3$Si-Z-S-R$^5$ ,

   wobei die Reste R$^4$ innerhalb eines Moleküls gleich oder verschieden voneinander sein können und Alkoxy-Gruppen mit 1 bis 10 Kohlenstoffatomen sind, und
   wobei R$^5$ eine Acylgruppe mit 1 bis 20 Kohlenstoffatomen oder ein Wasserstoffatom ist, und
   wobei Z eine Alkylgruppe mit 1 bis 10 Kohlenstoffatomen ist.

5. Fahrzeugluftreifen nach Anspruch 4, **dadurch gekennzeichnet, dass** es sich bei dem Mercaptosilan um das geblockte Mercaptosilan 3-Octanoylthio-1-propyltriethoxysilan handelt.

6. Fahrzeugluftreifen nach zumindest einem der vorhergehenden Ansprüche, **dadurch gekennzeichnet, dass** er ein Sommerreifen ist, dessen Laufstreifenprofil einen Criff-Index < 1,5 mm aufweist und dessen Kautschukmischung des Laufstreifens eine Kältesprödigkeitstemperatur gemäß DIN ISO 812 von > -45 °C aufweist.

7. Fahrzeugluftreifen nach zumindest einem der Ansprüche 1 bis 5, **dadurch gekennzeichnet, dass** er ein Ganzjahresreifen ist, dessen Laufstreifen einen Criff-Index von 1,5 bis 2,5 mm aufweist und dessen Kautschukmischung des Laufstreifens eine Kältesprödigkeitstemperatur gemäß DIN ISO 812 von ≤ -45 °C aufweist.

**Claims**

1. Pneumatic vehicle tyre having a tread which has a tread profile and is made of a sulfur-crosslinked rubber mixture, wherein the pneumatic vehicle tyre is a summer tyre or all-season tyre having a Criff index of the tread profile of ≤ 2.5 mm, where the Criff index is determined by the formula

$$\text{Criff} - \text{Index} = \sum_{factor} l_i \times \frac{h_i}{d_i}$$

with the lamella and block edge lengths *l* of the tread profile, the average lamella and groove depth *h* and the edge separation *d* of the lamellas in mm on projection of the profile in braking direction, and the rubber mixture comprises

   - at least one diene rubber,
   - 30 to 250 phr of at least one silica and
   - 6.9 to 19.8 mmol of at least one blocked and/or unblocked mercaptosilane per 100 g of silica, based on a silica having a CTAB surface area (to ASTM D 3765) of 160 $m^2$/g.

2. Pneumatic vehicle tyre according to Claim 1, **characterized in that** the rubber mixture contains 9.6 to 18.1 mmol of at least one blocked and/or unblocked mercaptosilane per 100 g of silica, based on a silica having a CTAB surface area (to ASTM D 3765) of 160 $m^2$/g.

3. Pneumatic vehicle tyre according to Claim 1 or 2, **characterized in that** the rubber mixture contains 12.3 to 15.6 mmol of at least one blocked and/or unblocked mercaptosilane per 100 g of silica, based on a silica having a CTAB surface area (to ASTM D 3765) of 160 $m^2$/g.

4. Pneumatic vehicle tyre according to at least one of the preceding claims, **characterized in that** the blocked and/or unblocked mercaptosilane has the general empirical formula I):

   I)         $(R^4)_3$Si-Z-S-$R^5$

   where the $R^4$ radicals within a molecule may be the same or different and are alkoxy groups having 1 to 10 carbon atoms, and
   where $R^5$ is an acyl group having 1 to 20 carbon atoms or a hydrogen atom, and
   where Z is an alkyl group having 1 to 10 carbon atoms.

5. Pneumatic vehicle tyre according to Claim 4, **characterized in that** the mercaptosilane is the blocked mercaptosilane 3-octanoylthio-1-propyl-triethoxysilane.

6. Pneumatic vehicle tyre according to at least one of the preceding claims, **characterized in that** it is a summer tyre wherein the tread profile has a Criff index < 1.5 mm and wherein the rubber mixture of the tread has a cold brittleness temperature according to DIN ISO 812 of > -45°C.

7. Pneumatic vehicle tyre according to at least one of Claims 1 to 5, **characterized in that** it is an all-season tyre wherein the tread has a Criff index of 1.5 to 2.5 mm and wherein the rubber mixture of the tread has a cold brittleness temperature according to DIN ISO 812 of ≤ -45°C.

**Revendications**

1. Pneu de véhicule ayant une bande de roulement qui présente un profil de bande de roulement en un mélange de caoutchouc réticulé au soufre, le pneu de véhicule étant un pneu été ou toute saison ayant un indice Criff du profil de bande de roulement ≤ 2,5 mm, l'indice Criff étant déterminé selon la formule suivante :

$$\text{Indice Criff} = \sum_{footpr.} l_i \times \frac{h_i}{d_i}$$

avec les longueurs de lamelle et de bords de bloc *l* du profil de bande de roulement, la profondeur de lamelle et de rainure moyenne *h* et l'écart des bords *d* des lamelles en mm lors d'une projection du profil dans le sens du freinage, et le mélange de caoutchouc contenant :

- au moins un caoutchouc diénique,
- 30 à 250 pce d'au moins une silice et
- 6,9 à 19,8 mmol d'au moins un mercaptosilane bloqué et/ou non bloqué pour 100 g de silice, par rapport à une silice ayant une surface CTAB (selon ASTM D 3765) de 160 $m^2$/g.

**2.** Pneu pour véhicule selon la revendication 1, **caractérisé en ce que** le mélange de caoutchouc contient 9,6 à 18,1 mmol d'au moins un mercaptosilane bloqué et/ou non bloqué pour 100 g de silice, par rapport à une silice ayant une surface CTAB (selon ASTM D 3765) de 160 $m^2$/g.

**3.** Pneu pour véhicule selon la revendication 1 ou 2, **caractérisé en ce que** le mélange de caoutchouc contient 12,3 à 15,6 mmol d'au moins un mercaptosilane bloqué et/ou non bloqué pour 100 g de silice, par rapport à une silice ayant une surface CTAB (selon ASTM D 3765) de 160 $m^2$/g.

**4.** Pneu de véhicule selon au moins l'une quelconque des revendications précédentes, **caractérisé en ce que** le mercaptosilane bloqué et/ou non bloqué présente la formule globale générale I) :

I) $(R^4)_3$Si-Z-S-$R^5$

dans laquelle les radicaux $R^4$ peuvent être identiques ou différents les uns des autres dans une molécule, et sont des groupes alcoxy de 1 à 10 atomes de carbone, et
$R^5$ est un groupe acyle de 1 à 20 atomes de carbone ou un atome d'hydrogène, et
Z est un groupe alkyle de 1 à 10 atomes de carbone.

**5.** Pneu de véhicule selon la revendication 4, **caractérisé en ce que** le mercaptosilane est le mercaptosilane bloqué 3-octanoylthio-1-propyltriéthoxysilane.

**6.** Pneu de véhicule selon au moins l'une quelconque des revendications précédentes, **caractérisé en ce qu'**il s'agit d'un pneu été, dont le profil de bande de roulement présente un indice Criff < 1,5 mm et dont le mélange de caoutchouc de la bande de roulement présente une température de fragilité à froid selon DIN ISO 812 > - 45 °C.

**7.** Pneu de véhicule selon au moins l'une quelconque des revendications 1 à 5, **caractérisé en ce qu'**il s'agit d'un pneu toute saison, dont la bande de roulement présente un indice Criff de 1,5 à 2,5 mm et dont le mélange de caoutchouc de la bande de roulement présente une température de fragilité à froid selon DIN ISO 812 ≤ -45 °C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9909036 A
- WO 2008083241 A1
- WO 2008083242 A1
- WO 2008083243 A1
- WO 2008083244 A1
- EP 2557114 A1
- DE 102008037593 A1
- JP 2006077097 A
- EP 2105462 A1
- WO 2010049216 A2

**In der Beschreibung aufgeführte Nicht-Patentliteratur**

- **MUNDL, R. ; FISCHER, M. ; STRACHE, W. ; WIESE, K. ; WIES, B. ; ZINKEN, K. H.** Virtual Pattern Optimization Based on Performance Prediction Tools. *Tire Science and Technology, TSTCA,* Juli 2008, vol. 36 (3), 192-210